(19) Europäisches Patentamt / European Patent Office / Office européen des brevets

(11) **EP 1 729 153 B1**

(12) **FASCICULE DE BREVET EUROPEEN**

(45) Date de publication et mention de la délivrance du brevet:
**04.11.2009 Bulletin 2009/45**

(51) Int Cl.:
***G01V 11/00*** *(2006.01)*

(21) Numéro de dépôt: **06290753.0**

(22) Date de dépôt: **05.05.2006**

(54) **Méthode pour simuler les écoulements de fluides au sein d'un réservoir à l'aide d'une discrétisation de type chimère**

Verfahren zum Simulieren der Flüssigkeitsströmung in einem Reservoir mit Hilfe einer Diskretisierung vom Chimärentyp

Method for simulating fluid flow in a reservoir using a chimera type discretization

(84) Etats contractants désignés:
**GB NL**

(30) Priorité: **02.06.2005 FR 0505680**

(43) Date de publication de la demande:
**06.12.2006 Bulletin 2006/49**

(73) Titulaire: **Institut Français du Pétrole**
**92852 Rueil Malmaison Cedex (FR)**

(72) Inventeurs:
* **Bennis, Chakib**
  **92500 Rueil-Malmaison (FR)**
* **Faille, Isabelle**
  **78240 Carrières-sur-Seine (FR)**
* **Ladouari, Lionel**
  **75005 Paris (FR)**
* **Masson, Roland**
  **92800 Puteaux (FR)**
* **Moraisin, Bertrand**
  **75015 Paris (FR)**

(56) Documents cités:
* **PATRICK JENNY, CHRISTIAN WOLFSTEINER, SONG H. LEE, LOUIS J. DURLOFSKY: "Modeling Flow in Geometrically Complex Reservoirs Using Hexahedral Multi-Block Grids" SPE JOURNAL, vol. 7, no. 2, juin 2002 (2002-06), XP002364060**
* **KAO K-H ET AL: "GRID ADAPTATION USING CHIMERA COMPOSITE OVERLAPPING MESHES" AIAA JOURNAL, AMERICAN INSTITUTE OF AERONAUTICS AND ASTRONAUTICS, US, vol. 32, no. 5, mai 1994 (1994-05), pages 942-949, XP009054272 ISSN: 0001-1452**
* **DJOMEHRI M J ET AL: "An analysis of performance enhancement techniques for overset grid applications" PARALLEL AND DISTRIBUTED PROCESSING SYMPOSIUM, 2003. PROCEEDINGS. INTERNATIONAL APRIL 22-26, 2003, PISCATAWAY, NJ, USA,IEEE, 22 avril 2003 (2003-04-22), pages 64-72, XP010645587 ISBN: 0-7695-1926-1**

## Description

La présente invention concerne une méthode pour simuler les écoulements de fluides au sein d'un réservoir à partir de méthodes dites "chimères".

Il s'agît d'une solution alternative pour la simulation de réservoir, permettant de prendre en compte les directions radiales des écoulements autour des puits, et donc d'améliorer la précision des calculs. De plus cette approche modulaire permet de tester de façon efficace et conviviale plusieurs scénarios d'exploitation lors de la modélisation.

Un réservoir pétrolier est une formation du sous-sol poreuse et perméable associée à une couverture imperméable qui piège les hydrocarbures. L'ordre de grandeur de l'extension latérale d'un réservoir est le kilomètre, alors qu'en profondeur il est plutôt la dizaine de mètres. Il est traversé par un nombre variable de discontinuités géométriques telles que des puits ou des failles.

En exploration pétrolière, l'étude d'un réservoir pétrolier nécessite de simuler les écoulements des fluides au sein du réservoir et des discontinuités géométriques qui le traversent, pour définir l'intérêt économique et les modalités de production du champ. Ces simulations sont appelées "simulations de réservoirs".

Pour ce faire, il est nécessaire de simuler les écoulements de fluides sur la totalité du domaine couvert par le réservoir, en prenant en compte toutes les discontinuités géométriques qui le traversent. Le domaine de simulation est alors défini comme l'ensemble comprenant le réservoir et les discontinuités géométriques. Cette simulation nécessite d'une part, une modélisation physique des écoulements par un jeu d'équations appelé modèle d'écoulement, et d'autre part une discrétisation de ces équations pour résoudre le problème de manière approchée. Le domaine de simulation est représenté à l'aide d'un maillage permettant de le discrétiser dans l'espace, et permettre ainsi de résoudre les équations discrètes et fournir une approximation de la solution physique. Simuler les écoulements de fluides au sein d'un réservoir nécessite donc deux étapes :

- discrétiser la structure du domaine par un maillage ;

- discrétiser les équations d'écoulement en fonction du maillage choisi.

## État de la technique

La génération de maillage est un élément crucial pour les simulateurs de réservoir pétroliers de nouvelle génération. Le maillage permet de décrire la géométrie de la structure géologique étudiée au moyen d'une représentation en éléments discrets dans lesquels on effectue la simulation. Une meilleure compréhension des phénomènes physiques nécessite de simuler en 3D des écoulements polyphasiques dans des structures géologiques de plus en plus complexes, au voisinage de plusieurs types de singularités telles que les stratifications, les failles, les biseaux, les chenaux et les puits complexes. Toute cette complexité doit être prise en compte en premier lieu par le maillage qui doit restituer aussi fidèlement que possible les informations géologiques dans leur caractère hétérogène. De plus, une bonne appréhension des phénomènes physiques se déroulant dans ces structures complexes nécessite une approche de maillage hiérarchique et modulaire.

Les documents suivants que l'on va citer dans le cours de la description ci-après, illustrent l'état de la technique :

- Alexander S. Williamson and John E. Chappelear, « Representing Wells in Numerical Reservoir Simulation : Part 1 theory », SPE 7697, 1981

- Sophie Balaven-Clermidy, "Génération de maillages hybrides pour la modélisation de réservoirs pétroliers", Thèse de doctorat, IFP, Ecole des mines de Paris , 2001.

- Chesshire et Henshaw, "Composite Overlapping Meshes for the Solution ofPartial Differential Equations", Journal of computational physics 90, 1-64, 1990.

- Shih, "Overset grids: Fundamentals and Practical Issues", AIAA Applied Aerodynamics Conference. 3259, 2002.

- Lin, C.W., Smith, G.D., and Fisher, S.C. - Application of a Multiblock Grid Generation Approach to Ship Configuration, 3rd International Conference on Numerical Grid Generation in CFD, Spain, June 1991.

Les puits sont en général des tubes minces d'un rayon d'une dizaine de centimètres et comportant quelques perforations (aux endroits les plus perméables). Les problèmes d'échelle en modélisation de réservoir sont donc flagrants : les modèles d'écoulement réservoir/puits ne peuvent être pour cette raison que des modèles couplés. Cette différence d'échelle est également à prendre en compte dans le cas où la discontinuité est une faille. C'est pourquoi, il est crucial d'obtenir une description fine des écoulements autour des discontinuités.

On connaît plusieurs approches basées sur l'utilisation d'un maillage complet pour représenter l'ensemble du domaine de simulation (réservoir + discontinuités). Une méthode couramment employée consiste à mailler la partie réservoir du domaine en un seul bloc (plusieurs dans le cas de failles), et d'intégrer la présence d'autres discontinuités telles que des puits au niveau des équations. La présence de puits est considérée comme un terme source définit à l'aide d'un indice de productivité appelé *Ip*. Cette méthode est décrite par exemple dans le document de Williamson (1981)

Cependant, la nécessité d'une description plus fine des écoulements autour des discontinuités, telles que des puits, conduit à l'élaboration d'une approche modulaire où l'on peut prendre en compte individuellement les différents objets (réservoir et puits par exemple) considérés. La modélisation des écoulements, autour des puits par exemple, est réalisée grâce aux "modèles de puits". Ces modèles permettent de simuler des écoulements polyphasiques dans l'aire de drainage du puits en adoptant une description à petite échelle des caractéristiques du milieu poreux aux abords du puits où les écoulements sont rapides.

Ainsi, dans une méthode plus récente développée par le demandeur, l'on maille le réservoir puis la région proche de la discontinuité et enfin l'on fusionne les deux maillages en créant une zone de transition. On parle alors de maillages hybrides, comme décrits dans le document de S. Balaven-Clermidy (2001).

Cette méthode nécessite un effort important pour générer le maillage de la zone de transition notamment en trois dimensions.

Une alternative à cette approche est l'emploi de maillages multi-blocs dans lesquels le domaine de calcul est représenté par un ensemble de sous-domaines, maillés indépendamment les uns des autres. Il peuvent être avec ou sans recouvrement. On connaît par exemple des maillages multi-blocs avec recouvrement non-coïncidents appelés "maillages chimères" ou "Composite Overlapping Meshes". Ce type de maillage est décrit par exemple dans Chesshire et Henshaw (1990). Ces maillages chimères sont utilisés depuis une dizaine d'années dans les domaines de l'aéronautique (Shih, 2002) et de l'hydrodynamique (Lin, Smith, G.D., and Fisher (1991) pour les géométries complexes et en particulier celles dotées de corps mobiles (missiles, pales d'hélicoptères, couplages fluide structure, ...). Ce type de maillage permet une description adéquate des écoulements au bord de discontinuités, mais la gestion des sous-domaines d'un point de vue des écoulements nécessite des méthodes particulières appelées méthodes chimères. Cependant, les techniques actuelles de création de maillage chimère et les méthodes chimères associées ne sont pas appliquées pour la simulation de réservoir.

La méthode selon l'invention permet de simuler les écoulements de fluides au sein du réservoir et de ses discontinuités géométriques, en modélisant la structure du domaine par un maillage chimère et en adaptant le modèle d'écoulement de fluides à ce maillage à l'aide de méthodes chimères appropriées.

**La méthode selon l'invention**

L'invention concerne une méthode pour simuler des paramètres d'écoulements de fluides au sein d'un milieu hétérogène, constituant un premier sous-domaine, traversé par au moins une discontinuité géométrique, constituant un second sous-domaine. La méthode comporte les étapes suivantes :

- on génère un maillage chimère pour construire une représentation discrétisée desdits sous-domaines, en formant au moins un premier maillage pour mailler ledit premier sous-domaine et en formant au moins un deuxième maillage pour mailler ledit second sous-domaine, les deux maillages ayant au moins une zone de recouvrement ;

- on détermine des paramètres d'interpolation pour estimer des paramètres d'écoulement dans ladite zone de recouvrement tout en imposant la continuité des paramètres d'écoulements entre chaque sous-domaine ;

- on simule lesdits paramètres d'écoulement en résolvant les équations d'au moins un modèle d'écoulement dans lesdits sous-domaines et en interpolant les paramètres d'écoulements au niveau de ladite zone de recouvrement en utilisant lesdits paramètres d'interpolation.

Selon la méthode, la génération dudit maillage chimère peut comporter les étapes suivantes :

- on définit pour ledit premier sous-domaine une méthode d'interpolation permettant d'estimer des paramètres d'écoulement de fluides pour chaque maille dudit premier maillage inclue dans la zone de recouvrement ;

- on définit un paramètre de recouvrement définissant la taille de ladite zone de recouvrement ;

- on détermine une frontière limite, en accord avec ladite méthode d'interpolation et ledit paramètre de recouvrement ;

- on détermine les mailles dudit premier maillage à interpoler en fonction de ladite frontière limite, en sélectionnant les mailles dont tous les points à interpoler se trouvent à l'intérieur de ladite frontière limite ;

La génération dudit maillage chimère peut comporter également les étapes suivantes

- on détermine et désactive des mailles, parmi lesdites mailles dudit premier maillage à interpoler, qui ne serviront pas à priori à interpoler des paramètres d'écoulement pour des mailles dudit second maillage, en sélectionnant des mailles dont toutes les mailles voisines sont à interpoler ;

- on définit pour ledit second sous-domaine une méthode d'interpolation permettant d'estimer des paramètres d'écoulement de fluides pour chaque maille dudit second maillage inclue dans la zone de recouvrement ;

- on vérifie que toutes les mailles dudit second maillage à interpoler sont interpolables et l'on rajoute les mailles désactivées nécessaires à ces interpolations.

Les méthodes d'interpolation peuvent être choisies parmi au moins l'une des méthodes suivantes :

- interpolation des paramètres d'écoulement au centre des mailles ;

- interpolation des paramètres d'écoulement au centre des faces des mailles ;

- interpolation des flux sur les faces des mailles.

Si la discontinuité géométrique est un puits, ledit second maillage peut être un maillage radial généré à partir de l'une au moins des méthodes géométrique suivantes :

- une méthode géométrique basée sur les rayons initial et final, le nombre de mailles suivant $r$ et la progression géométrique souhaitée $q$ ;

- une méthode géométrique basée sur les rayons initial et final, le nombre de mailles suivant $r$ et la longueur des mailles de bord suivant r ;

- une méthode automatique basée localement sur la longueur moyenne des arêtes de mailles dudit premier maillage. On peut déterminer des mailles nécessaires à l'interpolation des paramètres d'écoulements au niveau des zones de recouvrement en déterminant l'enveloppe convexe de centres de mailles contenant un point donné, et en déterminant une maille contenant ledit point donné. L'enveloppe convexe peut être déterminée à l'aide d'une technique de tri appelée "bucket sort" et on peut déterminer une maille contenant ledit point donné à l'aide d'un maillage virtuel. D'autres caractéristiques et avantages de la méthode selon l'invention, apparaîtront à la lecture de la description ci-après d'exemples non limitatifs de réalisations, en se référant aux figures annexées et décrites ci-après.

**Présentation succincte des figures**

- la figure 1 montre un maillage radial ;

- la figure 2 illustre la définition d'une maille d'un maillage radial ;

- la figure 3 illustre la définition d'un cercle limite avec une interpolation au centre des mailles ;

- la figure 4A illustre une partir d'un maillage chimère avec un recouvrement égale à un ;

- la figure 4B illustre une partir d'un maillage chimère avec un recouvrement égale à deux ;

- la figure 5 montre un exemple de maillage chimère en 3D, construit selon la méthode, dans lequel on intègre un puits incliné dans un maillage CPG ;

- la figure 6 illustre la méthode d'interpolation au centre d'une maille ;

- la figure 7 illustre la méthode d'interpolation au centre d'une arête ;

- la figure 8 illustre la méthode d'interpolation du flux au centre d'une arête.

**Description détaillée de la méthode**

Selon l'invention, la méthode de simulation des écoulements de fluide au sein d'un d'un réservoir peut se décomposer en trois étapes principales :

1. Construction d'un maillage chimère représentant le domaine de simulation, c'est-à-dire l'ensemble constitué du sous-domaine réservoir et des sous-domaine des discontinuités traversant le réservoir ;

2. Définition de formules d'interpolation au niveau de la zone de recouvrement pour assurer la continuité de la solution sur les bords des sous-domaines ;

3. Simulation des écoulements de fluide au sein du domaine de simulation.

Pour simplifier la description, l'on se place dans le cadre où les discontinuités sont des puits, ce qui permet d'illustrer la prise en compte d'écoulements radiaux, sans limiter l'invention à ce seul type de discontinuité.

## 1- Construction d'un maillage chimère représentant le domaine de simulation

Un maillage chimère est un maillage multi-blocs avec recouvrement. Ces maillages sont constitués d'un ensemble de grilles (maillages) élémentaires recouvrant le domaine d'étude, avec pour seules contraintes un recouvrement minimal et des tailles de mailles voisines dans les zones de recouvrement. Le principal atout de ce type de grilles réside dans la flexibilité et la modularité de la définition du maillage, des modèles et des méthodes numériques de chacun des blocs. D'autre part, elles permettent l'utilisation de grilles élémentaires structurées et donc de solveurs rapides dans les blocs et sont naturellement adaptées au calcul parallèle.

Selon l'invention, la construction d'un maillage chimère peut se décomposer en trois étapes :

- Construction d'un maillage représentant le réservoir ;

- Construction de maillages représentant les puits traversant le réservoir;

- Définition de la zone de recouvrement des maillages de réservoir et de puits.

### 1.1- Construction d'un maillage représentant le réservoir :

Le réservoir peut être discrétisé par des maillages cartésiens réguliers (pas de discrétisation identiques dans toutes les directions), irréguliers (allongés suivant une direction) ou des maillages Corner-Point Geometry (CPG) :

- Un maillage cartésien est un maillage dont les sommets sont de la forme $(X_i, Y_j, Z_k)$ avec i,j et k des entiers naturels. Un maillage cartésien peut être généré en discrétisant chaque direction de la boîte englobante de façon identique ou non en fonction du type de maillage cartésien souhaité (régulier ou irrégulier).

- Un maillage CPG peut être défini en partant de 12 courbes définissant chacune une arête du maillage. La discrétisation de chacune de ces courbes donnera alors le maillage voulu.. De tels maillages sont décrits par exemple dans le brevet FR 2 747 490 (US 5 844 564) du demandeur.

Le maillage de réservoir est donc défini par :

- sa boîte englobante, c'est à dire un volume cartésien;

- ses pas de discrétisation dans chaque direction.

### 1.2- Construction de maillages représentant les puits traversant le réservoir :

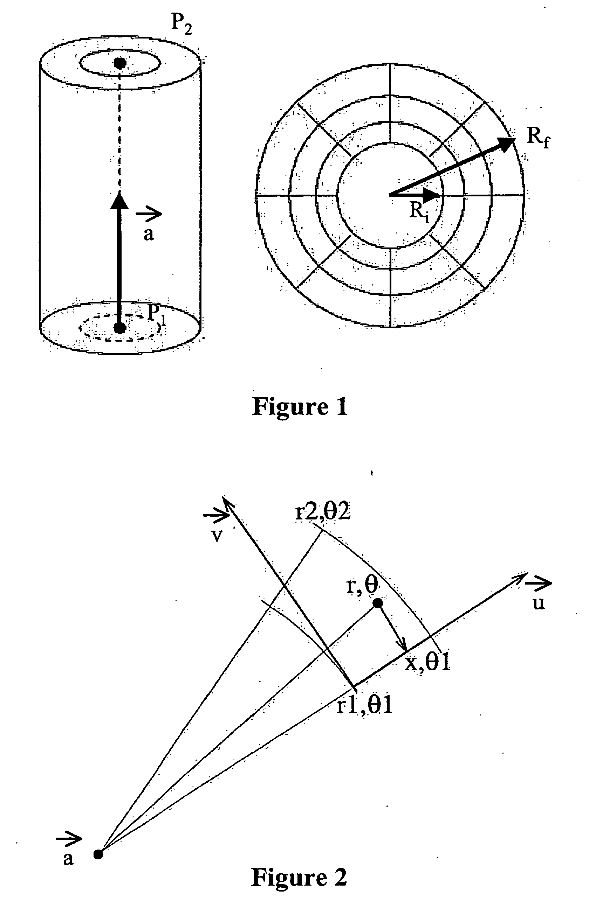

Les puits peuvent être discrétisés par un maillage structuré de type radial circulaire, permettant de modéliser l'aire de drainage des puits. La figure 1 illustre un maillage radial. Un tel maillage est défini par :

- la trajectoire du puits (au moins deux points $P_1$ et $P_2$ définissant un axe $\vec{a}$ ) ;

- les rayons initial ($R_i$) et final ($R_f$).

Une maille peut alors être définie par (figure 2) :

- les rayons minimum et maximum de cette maille r1 et r2 ;
- les angles minimum et maximum de cette maille θ1 et θ2.

Un point dans ce maillage est alors repéré par ses coordonnées polaires r et θ (figure 2).

- r : distance à l'axe du puits (par rapport à une origine O)

- θ : rotation autour de l'axe du puits

Pour mieux répondre aux besoins de la simulation selon l'invention, trois méthodes de génération de maillage radial sont présentées :

1. une méthode géométrique basée sur les rayons initial et final, le nombre de mailles suivant r et la progression géométrique souhaitée $q$ ;

2. une méthode géométrique basée là encore sur les rayons initial et final, le nombre de mailles suivant $r$ et la longueur des mailles de bord suivant $r$ (valeur initiale de la suite géométrique) ;

3. une méthode automatique basée sur les rayons initial et final.

**Avec progression géométrique**

La première méthode est la plus simple puisqu'elle est basée uniquement sur la définition des suites géométriques.
Ayant un rayon initial $R_i$ et un rayon final $R_f$, on peut trouver une suite géométrique de raison $q$ fixée passant par $n$+1 points ($R_0 = R_i$ et $R_n = R_f$). Chaque point de cette suite est défini par :

$$R_k = R_i + h.\frac{1-q^k}{1-q}$$

Il suffit alors de déterminer $h$, la longueur de la première maille (de $R_0$ à $R_1$), en fonction des autres paramètres :

$$R_f = R_i + h.\frac{1-q^n}{1-q} \Rightarrow h = \frac{(R_f - R_i).(1-q)}{1-q^n}$$

Il est maintenant possible d'évaluer la première formule pour $k=0...n$ pour connaître le rayon de chaque niveau de discrétisation du puits.

**Avec progression géométrique et longueur de maille fixée**

La seconde méthode s'appuie toujours sur les suites géométriques mais cette fois en fixant au départ la valeur de h. Cette méthode peut-être utile si on souhaite s'assurer que les mailles de bord du maillage généré ont une longueur donnée. Le paramètre manquant dans ce cas est la raison géométrique $q$, qui vérifie une équation polynomiale de degré n à résoudre en fonction des autres paramètres.

**Avec longueur de maille fixée**

La dernière méthode n'est plus basée sur la définition des suites géométriques. Il s'agit de la méthode la plus automatique : les paramètres sont calculés à partir des mailles du maillage de réservoir.

Soit H la longueur moyenne des arêtes d'une maille réservoir. On décide de fixer cette longueur H comme étant la longueur de l'arête extérieure des mailles de bord du puits. Le but ici est de générer un maillage radial dont les mailles de bord possèdent une taille à peu près équivalente à celle des mailles réservoir.

H étant fixé, on détermine le pas de discrétisation $n_\theta$ du puits suivant l'angle θ de rotation autours de l'axe $\vec{a}$ du puits (voir figure2) :

$$n_\theta = \frac{2\pi . R_f}{H}$$

Le pas de discrétisation devant être entier, on prend l'entier le plus proche de $n_\theta$, noté $\tilde{n}_\theta$, et on peut alors définir$\tilde{H}$ et$\tilde{h}$, les longueurs suivant $r$ des mailles de bord extérieur et intérieur du puits :

$$\tilde{H} = \frac{2\pi . R_f}{\tilde{n}_\theta} \ \text{ et } \ \tilde{h} = \frac{2\pi . R_i}{\tilde{n}_\theta}$$

Ces deux valeurs représentent les valeurs initiale et finale de la progression des mailles suivant r.

L'étape suivante est de déterminer le nombre de mailles à insérer pour que ces dimensions soient respectées au mieux (on cherche juste une approximation de la taille des mailles réservoir).

Soit la fonction d'interpolation géométrique β$(s)$ définie par :

$$\beta(s) = \tilde{h}\left(\frac{\tilde{H}}{\tilde{h}}\right)^s \ \text{ avec } s \in [0, 1]$$

On en déduit la valeur de n :

$$n = \frac{d}{\tilde{h}} . \left[ \frac{\tilde{h} - \tilde{H}}{\tilde{H}.\ln\left(\frac{\tilde{h}}{\tilde{H}}\right)} \right]$$

Là encore, on prendra l'entier le plus proche de n, noté $\tilde{n}$, puisqu'on souhaite déterminer le nombre de mailles à insérer au long du rayon du puits.

Ensuite, il faut déterminer la position de chacun des points de discrétisation par rapport aux rayons initial et final.

Il suffit pour cela de fixer n = $N$ et de résoudre l'équation *en t :*

$$N.\frac{n}{\tilde{n}} = d.\int_0^t \frac{1}{\beta(s)} ds$$

pour $N = 0...\tilde{n}$, $\tilde{n}$ étant l'entier le plus proche de $n$. La multiplication par $n/\tilde{n}$ permet simplement de réajuster la valeur de $N$ en fonction de l'arrondi effectué sur n.

La valeur de $t$ trouvée permettra de situer le point de discrétisation $N$ le long du rayon, à partir de $R_i$.

1.3- Définition de la zone de recouvrement du maillage chimère.

La définition de la zone de recouvrement d'un maillage chimère, à partir des maillages de réservoir et de puits, consiste essentiellement à définir les cellules pour lesquelles aucune simulation de paramètres d'écoulement n'est nécessaire. Après la création du maillage de réservoir et du maillage radial, il existe trois types de mailles dans le maillage chimère en cours de création :

- les mailles du maillage de réservoir hors de la zone de recouvrement ;

- les mailles du maillage de réservoir de la zone de recouvrement (qui nécessitent une interpolation) ;

- les mailles du maillage de puits nécessairement dans la zone de recouvrement (qui nécessitent une interpolation).

La définition de la zone de recouvrement consiste alors à :

- déterminer et marquer les mailles du maillage de réservoir dont les paramètres d'écoulement devront être interpolés à l'aide des paramètres d'écoulement des mailles du maillage des puits de la zone de recouvrement.

- déterminer et supprimer les mailles du maillage de réservoir pour lesquelles aucun calcul d'écoulement sera effectué.

Le maillage chimère ainsi construit possède donc quatre types de mailles :

- les mailles du maillage de réservoir hors de la zone de recouvrement ;

- les mailles du maillage de réservoir de la zone de recouvrement qui n'ont pas été désactivées ;

- les mailles du maillage de puits de la zone de recouvrement ;

- les mailles du maillage de puits hors de la zone de recouvrement (ne nécessitent plus d'interpolation).

Le nombre de mailles nécessitant un calcul des paramètres d'écoulement ou une interpolation est réduit tout en préservant une description fine des phénomènes d'écoulement au niveau des discontinuités.

Par soucis de clarté, la méthode est tout d'abord présentée en deux dimensions. La généralisation en trois dimensions est décrite ultérieurement.

La définition de la zone de recouvrement comporte 4 étapes principales :

étape 1.    définition d'un cercle limite, centré sur l'axe du puits ;

étape 2.    détermination et marquage, en fonction du cercle limite, des mailles du maillage de réservoir dont les paramètres d'écoulement devront être interpolés ;

étape 3.    détermination et désactivation des mailles interpolables du maillage de réservoir qui ne serviront pas à priori à interpoler des paramètres d'écoulement de mailles du maillage de puits et pour lesquelles aucun calcul d'écoulement sera effectué ;

étape 4.    rajout de quelques mailles au maillage de réservoir afin de garantir l'interpolation sur le maillage radial (de puits).

Ces différentes étapes sont décrites ci-après en détail :

étape 1 : définition d'un cercle limite

La définition du cercle limite dépend de deux paramètres :

- un type d'interpolation que l'on souhaite utiliser sur le sous-domaine du réservoir, c'est-à-dire le type d'interpolation utilisé pour définir les paramètres d'écoulement des mailles du maillage de réservoir à interpoler. On peut envisager trois types d'interpolation : au centre des mailles au centre des faces des mailles et aux flux.

- un paramètre du recouvrement définissant la taille du recouvrement. Ce paramètre correspond au nombre de couches externes du maillage radial qui sont recouvertes par le sous-domaine réservoir. Cette définition correspond à une notion discrète de recouvrement, c'est-à-dire qui correspond au maillage.

Le cercle limite est défini en fonction du type d'interpolation de la façon suivante :

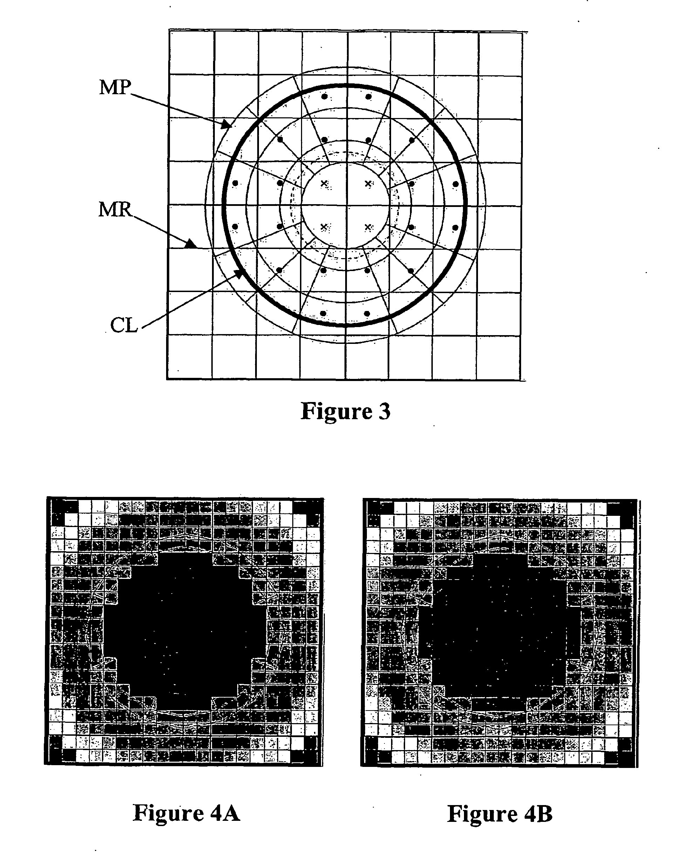

Si dans le réservoir on interpole avec le premier type d'interpolation (au centre des mailles), le cercle limite est le plus grand cercle centré au puits contenant des centres de mailles du maillage radial (maillage de puits). La figure 3 illustre ce type de cercle limite, où MR représente le maillage de réservoir, MP le maillage de puits et CL le cercle limite. Les points représentent les mailles de bord du maillage de réservoir et les croix représentent les mailles désactivées.

Si, toujours dans le réservoir, on interpole avec le deuxième type d'interpolation (au centre des faces), le cercle limite est encore le plus grand cercle centré au puits contenant des centres de mailles du maillage radial.

Si enfin on interpole le réservoir au flux, le cercle limite est le plus grand cercle centré au puits contenu dans le maillage radial.

Ensuite, ce cercle limite initial est redéfini en fonction du second paramètre, le paramètre de recouvrement. La définition de la taille du recouvrement du maillage chimère consiste à assurer qu'un certain nombre de couches du maillage radial soient recouvertes par le maillage réservoir une fois les mailles du maillages de réservoir désactivées (étape 3). Pour cela, on vérifie qu'une certaine couche du maillage radial est interpolable par des mailles du maillage de réservoir. Une couche est dite interpolable si elle ne comporte que des mailles interpolables. Ainsi, cette couche et toutes les couches de rayon supérieur sont recouvertes par des mailles réservoir. En effet si une couche du maillage radial est recouverte par le maillage de réservoir alors, au vu de la géométrie, il en va de même des couches dont le rayon est supérieur. De même, si une couche du maillage radial est interpolable il en est de même pour toutes les couches dont le rayon est supérieur.

Pour un recouvrement d'une seule couche, on prendra donc la couche extérieure du puits, c'est-à-dire, celle correspondant au cercle limite initial tel que défini précédemment (voir figure 4A). En revanche, pour un recouvrement supérieur on prendra la couche telle que le nombre de couches qui lui sont extérieures plus elle-même soit égal au paramètre de recouvrement voulu, redéfinissant ainsi le cercle limite. Dans l'exemple de la figure 4B, le recouvrement est égale à deux.

On peut ainsi définir, quelque soit le type d'interpolation, la « taille » du recouvrement qui sera le nombre de cercles qui sont au-delà du cercle limite initial.

étape 2 : détermination et marquage des mailles du maillage de réservoir interpolables

Le cercle limite, ainsi défini, permet d'identifier les centres ou les arêtes des mailles du maillage de réservoir qui sont à interpoler par des mailles du maillage de puits ainsi que les centres ou les arêtes des mailles qui se trouvent dans l'axe du puits.

Si dans le réservoir on interpole avec le premier type d'interpolation (au centre des mailles), les mailles *interpolables* sont les mailles dont les centres sont à l'intérieur de ce cercle limite.

Si, on interpole avec le deuxième type d'interpolation (au centre des faces), les mailles *interpolables* sont les mailles dont toutes les faces sont interpolables, une face interpolable étant une face dont le centre est à l'intérieur du cercle limite.

Si enfin on interpole le réservoir au flux, une maille interpolable sera comme dans le cas précédent, une maille dont toutes les faces sont interpolables et donc dont le milieu de chaque arête se situe à l'intérieur du cercle limite.

Toutes ces mailles interpolables du maillage de réservoir sont donc déterminées puis marquées.

étape 3 : désactivation grossière de la plupart des mailles interpolables

On désactive de manière grossière (on pratique un « trou » dans le maillage de réservoir) la plupart des mailles interpolables du maillage de réservoir : dans le cas d'une interpolation au centre des mailles on désactive toutes les mailles adjacentes à quatre mailles interpolables (donc toutes les mailles interpolables sauf les plus éloignées du centre), et dans le cas d'une interpolation aux flux ou au centre des arêtes on les désactive toutes. On obtient de la sorte le nombre minimum de mailles actives pour lequel l'interpolation sur le maillage réservoir est possible. En effet, dans le premier cas les mailles au bord du sous-domaine réservoir sont des mailles interpolables par le puits, et dans le deuxième cas le bord du sous-domaine réservoir est composé de faces interpolables par le puits.

étape 4 : rajout de mailles pour l'interpolation au bord du puits

A ce stade on ne peut pas assurer que l'interpolation sur le maillage de puits soit possible. En effet, il est possible que certaines mailles de réservoir nécessaires à l'interpolation des mailles du maillage radial aient été désactivées. Dans ce cas, on réactive les mailles réservoir nécessaires à l'interpolation sur le maillage de puits, en parcourant une à une les mailles du maillage radial en contact avec les mailles du maillage de réservoir (on parle des mailles du bord du puits) et l'on réactive les mailles du maillage de réservoir nécessaire à l'interpolation.

Pour ce faire, il est donc nécessaire de connaître le type d'interpolation que l'on souhaite réaliser pour définir les paramètres d'écoulement des mailles du maillage de puits à interpoler. On peut noter d'une part, que seule cette dernière étape dépend du type d'interpolation pratiquée sur le maillage puits, et d'autre part, que le type d'interpolation n'est pas nécessairement identique au type d'interpolation utilisé sur le sous-domaine du réservoir.

Les étapes principales de l'algorithme de définition de la zone de recouvrement du maillage chimère peuvent alors être décrites de la façon suivante :

étape 1.    définition d'un cercle limite, à partir du type d'interpolation à utilisé sur le sous-domaine réservoir et d'un paramètre de recouvrement ;

étape 2.    détermination et marquage des mailles dont tous les points à interpoler (centre ou centres d'arêtes) se trouvent à l'intérieur du cercle limite ;

étape 3.    détermination et désactivation des mailles dont toutes les mailles voisines sont interpolables (nécessaire pour que le maillage de puits soit pris en compte) ;

étape 4.    vérifier que toutes les mailles de bord du puits sont interpolables et rajouter les mailles du maillage de réservoir désactivées et nécessaires à ces interpolations.

### 1.4- Méthodes de détection des mailles interpolantes en 2D.

Le maillage ainsi défini est donc constitué dans sa zone de recouvrement d'un ensemble de mailles de réservoir à interpoler et un ensemble de mailles de puits à interpoler. Les mailles interpolables ont été clairement identifiées à ce stade. Il est alors nécessaire de définir les méthodes permettant de déterminer les mailles interpolantes, c'est-à-dire les mailles qui vont servir à interpoler les mailles interpolables. En particulier, il faut décrire les méthodes utilisées pour :

-    trouver les mailles dont l'enveloppe convexe des centres contient un point donné ;

-    savoir dans quelle maille se situe un point donné.

Pour déterminer l'enveloppe convexe de centres de mailles contenant un point donné, il faut rechercher le sommet le plus proche du point en question. Une fois ce sommet trouvé, il suffit de parcourir les mailles partageant ce sommet pour récupérer les centres dont l'enveloppe convexe contient le point donné.

Pour trouver le sommet le plus proche, on cherche d'abord le barycentre de maille le plus proche du point. Pour cela, la méthode peut utiliser une technique efficace de tri appelée "bucket sort". On détermine ensuite le sommet le plus proche parmi les 4 sommets (8 en 3D).

Pour déterminer quelle maille contient un point donné, on cherche d'abord le barycentre le plus proche de ce point. Une fois le barycentre obtenu, on crée un maillage virtuel de la maille trouvée à base de triangles. Ces triangles ont pour sommets le barycentre et deux sommets voisins de la maille.

Si un maillage n'est pas régulier, on peut rapidement cheminer de maille en maille jusqu'à ce qu'on trouve la maille contenant le point. En effet, il est possible que le barycentre le plus proche du point ne soit pas celui de la maille qui contient le point.

Dans ce cas, il suffit de bien organiser la liste des triangles du maillage virtuel de façon à ce que l'on sache en sortant d'un triangle donné vers quelle maille voisine on se dirige (haut, bas, gauche ou droite en 2D). Par exemple, on peut stocker les triangles dans ce même ordre. Si on sort de la maille par le dernier triangle, il faut donc analyser la maille qui se trouve à droite de la maille courante.

Pour savoir si un point se trouve dans un triangle donné, il suffit de tester sa position par rapport à chaque côté du triangle en utilisant les équations des droites passant par ces côtés.

La création du maillage virtuel est très simple. Il suffit, pour toute maille, de créer les triangles dans le même ordre, par exemple vers le haut, vers le bas, vers la gauche, vers la droite. L'essentiel étant de savoir pour un triangle donné vers quelle cellule voisine on se dirige.

### 1.5- Extension en 2.5D

Pour réaliser l'extension de la méthode à un cas 2.5D, on considère un maillage de réservoir cartésien et un maillage radial de puits. Le pas de discrétisation de ces deux maillages suivant z est le même. Les extrémités du maillage de puits correspondent aux limites du maillage de réservoir. On peut alors appliquer la méthode décrite ci-dessus à la face supérieure des deux maillages (cas 2D) et on étend le résultat à l'ensemble. Dans ce cas, une maille éliminée devient une colonne toute entière de cellules éliminées.

On peut également projeter le résultat 2D de départ sur une surface de la forme $z=f(x,y)$ au lieu de rester dans un plan. On répète ensuite cette projection suivant l'axe z pour obtenir un autre type de maillage en 2.5D.

1.5- Généralisation en 3D

La définition de la zone de recouvrement du maillage chimère selon l'invention peut être étendue directement en 3D, le cercle limite devenant une frontière limite (sphère, ellipsoïde,...). Cependant, il est nécessaire d'ajouter un hémisphère à chaque extrémité du puits pour modéliser les écoulements correctement, ceux-ci cessant d'être radiaux et devenant sphériques aux extrémités du puits

La méthode proposée est donc en mesure de donner des résultats corrects que le puits soit vertical ou incliné dans un réservoir cartésien ou CPG.

La détection des mailles interpolantes en 2D peut être étendue directement en 3D.

En cas d'interpolation au centre des mailles ou au centre des faces, il faut déterminer les huit cellules dont l'enveloppe convexe des centres contient le point à interpoler. Il s'agit, comme en 2D, des cellules qui partagent le sommet le plus proche du point.

Pour ce qui est de l'interpolation aux flux, là encore il suffit de déterminer la cellule qui contient le point à interpoler. La méthode est la même mais le maillage virtuel de la cellule sera cette fois constitué de tétraèdres.

Pour définir les tétraèdres du maillage virtuel, on divise chaque face en deux triangles. Chaque face étant définie par quatre sommets, on prendra la diagonale passant par le sommet de plus petit indice. Ainsi, les triangles seront définis de manière indépendante des cellules auxquelles ils peuvent appartenir.

On peut alors définir douze tétraèdres avec pour sommet le centre de la cellule et comme base un triangle d'une face. Les tétraèdres sont alors stockés dans un ordre précis permettant de savoir, en cas de sortie d'un des tétraèdres, dans quelle cellule voisine on doit aller effectuer les nouveaux tests (même principe qu'en deux dimensions). Pour savoir si un point est dans un tétraèdre, on utilise la même méthode qu'en 2D.

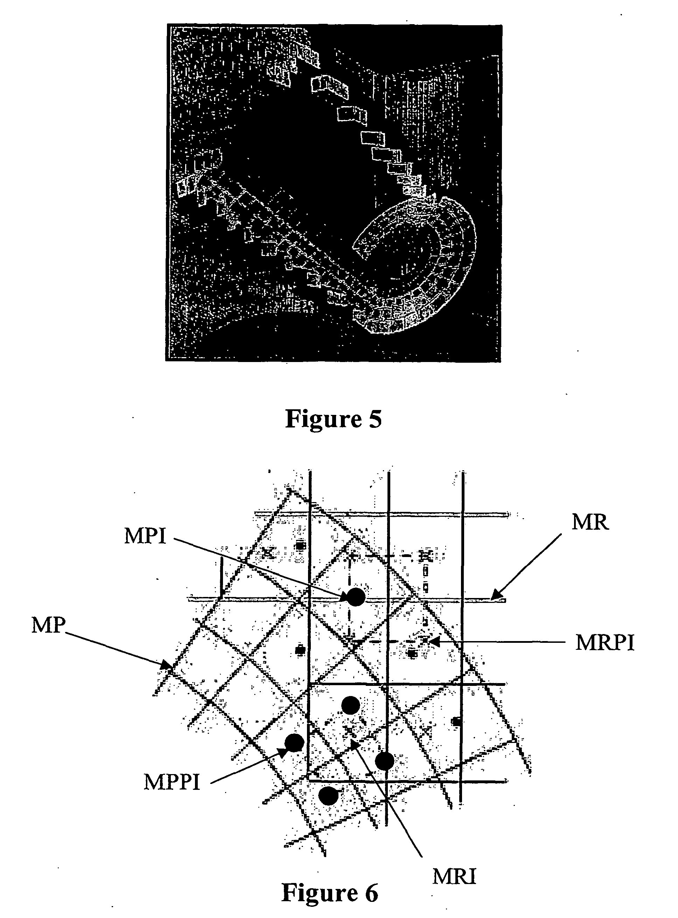

Un exemple de maillage chimère en 3D, construit selon la méthode, est illustré par la figure 5, dans lequel on intègre un puits incliné dans un maillage CPG.

## 2- Définition de formules d'interpolation au niveau de la zone de recouvrement

Le principal atout des maillages chimères réside dans la flexibilité et la modularité de la définition du maillage, des modèles et des méthodes numériques de chacun des sous-domaines. D'autre part, ils permettent l'utilisation de maillages élémentaires structurées et donc de solveurs rapides dans les sous-domaines et sont naturellement adaptés au calcul parallèle. En contrepartie, ils nécessitent, dans la zone de recouvrement, la définition de points et de formules d'interpolation pour le transfert d'information entre les grilles.

Le problème continu s'écrit :

- trouver une solution aux équations d'écoulement dans le réservoir ;

- trouver une solution aux équations d'écoulement dans le puits ;

- trouver ces solutions de sorte que ces solutions et leurs dérivées se raccordent continûment.

Lorsque l'on discrétise, c'est-à-dire une fois le maillage chimère construit, on a :

- un système d'équation pour le réservoir (une équation par maille du maillage de réservoir) ;

- un système d'équation pour le puits (une équation par maille du maillage de puits) ;

- des conditions de raccord qui, dans le cas chimère, sont des formules d'interpolation liant des inconnues d'un maillage avec les inconnues de l'autre. Ces formules sont appelées méthodes "chimères".

Les méthodes dites "Chimères" (méthodes de modélisation à partir d'un maillage Chimère) se proposent de résoudre des équations aux dérivées partielles sur des sous domaines dont les maillages se recouvrent mais sont indépendants. En particulier aucun sommet, aucun centre de maille et aucune arête ne sont communs aux deux maillages, et il faut pouvoir définir des conditions de bord (flux ou valeurs aux points) pour résoudre les équations dans chacun des sous-domaines. On se donne donc des formules d'interpolation pour pouvoir poser le système.

Trouver de bonnes formules d'interpolation est crucial puisque c'est de leur validité que va dépendre le bon comportement du schéma numérique. Cette définition est essentielle pour conserver l'ordre d'approximation des schémas utilisés dans chaque sous-domaine. Un des buts est aussi de conserver certaine propriétés des schémas classiques comme la stabilité (solution qui reste bornée au cours du temps de simulation) et dans certains cas la conservativité (conservation de la masse d'hydrocarbures dans le réservoir) des schémas numériques obtenus sur les maillages élémentaires. Les maillages des sous-domaines étant faits de sorte que la résolution du problème soit très efficace, la perte de qualité du schéma (consistance des flux, stabilité du schéma et conservativité de la masse) sera directement liée à une méthode d'interpolation défectueuse.

Trois méthodes ont été retenues, les deux premières pour des conditions de Dirichlet (valeur de la solution imposée au bord) et la dernière pour des conditions de Neuman (valeur de flux imposée au bord).

Les formules d'interpolations des paramètres d'écoulement sur un sous-domaine sont des combinaisons linéaires des paramètres d'écoulement de l'autre sous-domaine. De façon générale, ces formules permettent d'interpoler une valeur au niveau d'un point appelé "point à interpoler" qui représente, par exemple, le centre d'une maille d'un des maillages, à partir de points appelés "points interpolants" qui représentent, par exemple, les centres de mailles de l'autre maillages.

**Interpolation au centre d'une maille**

Dans ce cas, on appelle "point à interpoler" le centre d'une maille d'un des maillages, et on appelle "points interpolants" les centres de mailles de l'autre maillage utilisés pour interpoler le point à interpoler.

La valeur au centre d'une maille est interpolée par les valeurs des quatre centres de mailles dont l'enveloppe convexe contient le point à interpoler (8 centres en 3D).

Le calcul des coefficients d'interpolation est décrit ci-dessous pour l'interpolation au sein du maillage de réservoir, puis au sein du maillage de puits.

Au niveau du réservoir : soient $A, B,$ C, $D, E, F,$ G et $H$ les points interpolants et $P$ le point à interpoler. On suppose que $ABCDEFGH$ est un parallélépipède. On veut $\lambda_A$, $\lambda_B$, $\lambda_C$, $\lambda_D$, $\lambda_E$, $\lambda_F$, $\lambda_G$, et $\lambda_H$ tels que :

$$u_P = \lambda_A u_A + \lambda_B u_B + \lambda_C u_C + \lambda_D u_D + \lambda_E u_E + \lambda_F u_F + \lambda_G u_G + \lambda_H u_H$$

avec $u$ la valeur à interpolée (une pression typiquement)

On pose :

$$\vec{u} = \overrightarrow{AB}, \ \vec{v} = \overrightarrow{AF} \ \text{ et } \ \vec{w} = \overrightarrow{AD}$$

$$\hat{x} = \frac{\det(\overrightarrow{AP}, \vec{v}, \vec{w})}{\det(\vec{u}, \vec{v}, \vec{w})}, \ \hat{y} = \frac{\det(\vec{u}, \overrightarrow{AP}, \vec{w})}{\det(\vec{u}, \vec{v}, \vec{w})} \ \text{ et } \ \hat{z} = \frac{\det(\vec{u}, \vec{v}, \overrightarrow{AP})}{\det(\vec{u}, \vec{v}, \vec{w})}$$

Ici, les déterminants 3x3 représentent les volumes des parallélépipèdes construits sur les trois vecteurs. On calcul donc le quotient du volume correspondant à P dans chaque direction sur le volume total de la cellule.

On définit ensuite les coefficients d'interpolation de la manière suivante:

$$\lambda_A = (1 - \hat{x})(1 - \hat{y})(1 - \hat{z})$$

$$\lambda_C = \hat{x}(1 - \hat{y})\hat{z}$$

$$\lambda_E = \hat{x}\hat{y}(1 - \hat{z})$$

$$\lambda_G = (1 - \hat{x})\hat{y}\hat{z}$$

$$\lambda_B = \hat{x}(1 - \hat{y})(1 - \hat{z})$$

$$\lambda_D = (1 - \hat{x})(1 - \hat{y})\hat{z}$$

$$\lambda_F = (1 - \hat{x})\hat{y}(1 - \hat{z})$$

$$\lambda_H = \hat{x}\hat{y}\hat{z}$$

**Au niveau du puits** : compte tenu du maillage radial utilisé, il est nécessaire de travailler en coordonnées polaires. Pour chaque point, il faut donc déterminer r qui est sa distance à l'axe du puits, et θ qui est la rotation autour de l'axe du puits (voir figure 2).

Pour trouver *r*, on détermine simplement la distance du point à l'axe du puits en projetant ce point sur l'axe. Si le point se trouve dans une calotte (intersection entre une boule et un demi-espace) à une extrémité du puits, on prend la distance au sommet de l'axe correspondant.

Pour déterminer θ, on utilise un repère local à la maille contenant le point, comme illustré par la figure 2. En projetant le point de coordonnées (*r*; θ) sur l'axe ⊙ , on trouve le point O, puis l'abscisse x. On en déduit l'angle θ :

$$\theta = \theta_1 + ar\cos\left(\frac{x}{r}\right)$$

$\theta_1$ étant connu à la création des maillages car les valeurs de θ pour chaque sommet du puits sont stockées en mémoire à l'initialisation du puits.

Les formules utilisées sont ensuite les mêmes que dans le cas cartésien du réservoir.

La figure 6 illustre ce type d'interpolation pour le réservoir et pour le puits, avec :

- MR : Maillage de réservoir

- MP : Maillage de puits

- MRI : Maille du maillage de réservoir interpolée

- MPI : Maille du maillage de puits interpolée

- MRPI : Maille du maillage de réservoir utilisées pour l'interpolation de MPI

- MPPI: Maille du maillage de puits utilisées pour l'interpolation de MRI

**Interpolation de l'inconnue au centre d'une arête**

Dans ce cas, on appelle "point à interpoler" le centre d'une arête d'une maille d'un des maillages, et on appelle "points interpolants" les centres des mailles de l'autre maillage utilisés pour interpoler le point à interpoler.

Cette interpolation est très similaire à la précédente : on interpole avec les mêmes formules la valeur de l'inconnue mais cette fois au centre de l'arête. Par conséquent on écrit aussi l'équation suivante dans les mailles de bord :

$$u_P = \lambda_A u_A + \lambda_B u_B + \lambda_C u_C + \lambda_D u_D + \lambda_E u_E + \lambda_F u_F + \lambda_G u_G + \lambda_H u_H$$

Mais dans ce cas, P est le centre d'une arête de bord et on y applique les conditions de Dirichlet (valeur de la solution imposée au bord du sous-domaine), ce qui revient concrètement à introduire une inconnue de bord (up) ainsi qu'une équation (l'équation précédente) au système d'équations à résoudre pour trouver la solution approchée.

La valeur au centre d'une arête est interpolée par les valeurs des quatre centres de mailles dont l'enveloppe convexe contient le point à interpoler (8 centres en 3D), et le calcul des coefficients d'interpolation est identique à celui fait dans le cas de l'interpolation au centre des mailles.

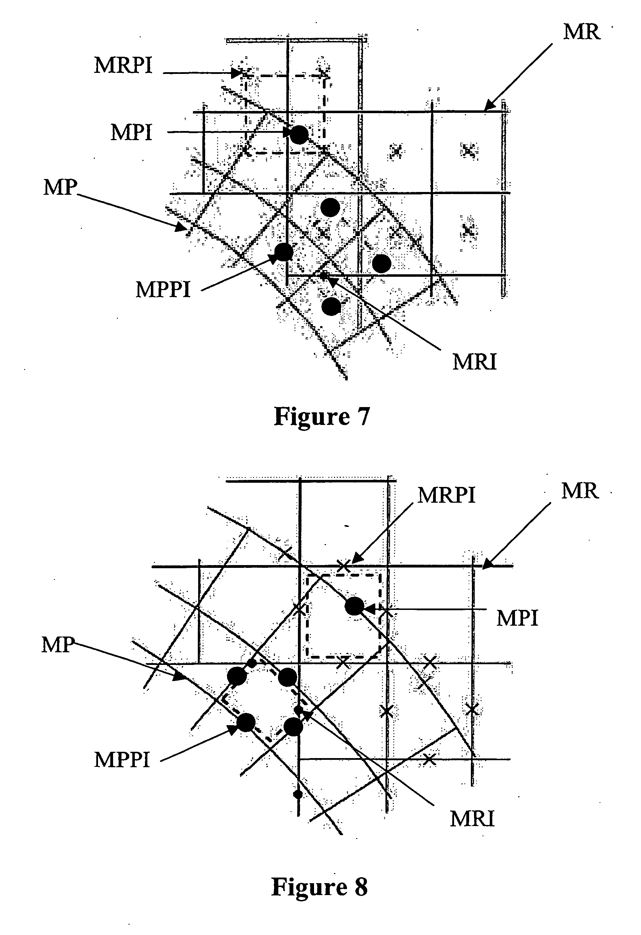

La figure 7 illustre ce type d'interpolation pour le réservoir et pour le puits, avec les mêmes notations que la figure 6.

**Interpolation du flux au centre d'une arête**

Dans ce cas, on appelle "point à interpoler" le centre d'une arête d'une maille d'un des maillages, et on appelle "points interpolants" les centres des arêtes de la maille de l'autre maillage utilisés pour interpoler le point à interpoler.

Ici on cherche à interpoler directement le flux sur le bord des sous-domaines. Cette interpolation est faite au milieu de l'arête par une formule d'éléments finis mixtes. La différence est que celle-ci ne dépend plus de la valeur des inconnues au centre des mailles voisines mais de la valeur du flux aux arêtes de la maille interpolante.

Pour calculer les coefficients d'interpolation $a_i$, on veut trouver ici le flux sur une face en fonction des flux des faces de la maille interpolante :

$$F_P = \sum_{i=1}^{6} \alpha_i F_i$$

On pose alors

$$\alpha_i = \frac{A}{A_i} \vec{v_i}.\vec{n}$$

où $A$ est l'aire de la face à interpoler, $Ai$ l'aire de la face interpolante i, $\vec{n}$ la normale extérieure à la face à interpoler et v, une fonction de base définie sur la maille interpolante de la manière suivante :

$$\vec{v_0} = -(1 - \hat{x}).\vec{u}$$

$$\vec{v_1} = -(1 - \hat{y}).\vec{v}$$

$$\vec{v_2} = -(1 - \hat{z}).\vec{w}$$

$$\vec{v_3} = \hat{x}.\vec{u}$$

$$\vec{v_4} = \hat{y}.\vec{v}$$

EP 1 729 153 B1

$$\overrightarrow{v_5} = \hat{z}.\vec{w}$$

Les vecteurs $\overline{u}$ , $\overline{v}$ , $\overline{w}$ et les valeurs ▨, ▨, , ▨ sont les mêmes que dans les deux autres types d'interpolation.

En définissant les v, de cette façon, on s'assure une continuité des flux d'une cellule à une autre car le flux sur une face ne dépend pas des autres faces. Cela s'explique simplement par le fait que :

$$\overrightarrow{v_i}.\overrightarrow{n_j} = \delta_{ij} = 0 \quad si \ i \neq j$$

donc :

$$Flux(\overrightarrow{v_i} \ sur \ face \ j) = \int_{S_j} \overrightarrow{v_i}.\overrightarrow{n_j}dS = 0 \quad si \ i \neq j$$

Si on évalue par exemple le flux de la face 0 en fonction des faces 0, 1, 2, 3, 4 et 5, on va retrouver $F_0$ car seul ▨ sera non nul.

La figure 8 illustre ce type d'interpolation pour le réservoir et pour le puits, avec les mêmes notations que les figures 6 et 7.

### 3- Simulation des écoulements de fluide au sein du domaine de simulation.

La simulation des écoulements de fluide consiste à affecter à chaque maille du maillage chimère précédemment construit, des valeurs de paramètres d'écoulement en définissant un schéma numérique et en précisant les interpolations inhérentes à la nature chimère du maillage.

Le modèle physique utilisé pour modéliser les écoulements de fluides dans le réservoir et dans la zone radiale autours du puits peut être un modèle diphasique compressible et non-compositionnel, bien connu de l'homme du métier et décrit par exemple dans le document suivant :

Peter Bastian, "Numerical Computation of Multiphase Flows in Porous media", Habilitationsschrift, Technische Fakultät, Christian-Albrechrs-Universität Kiel, 1999.

Le schéma numérique utilisé pour modéliser ces équations peut être un schéma de type Volume Finis décentré amont bien connu de l'homme du métier et décrit par exemple dans le document suivant :

Thierry Gallouët, Raphaëlle Herbin et Robert Eymard, "The Finite Volume Methods", in Philippe Ciarlet and J-L Lions, editors, Handbook of Numerical analysis, pages 713-1020, North Holland, 2000.

Le modèle physique utilisé pour modéliser les écoulements de fluides au sein même du puits peut être pris en compte comme une condition de bord (pression ou flux imposé)

Au niveau de la zone de recouvrement, on utilise les formules d'interpolations issues des méthodes chimères choisies et décrites précédemment.

### Revendications

**1.** Méthode pour simuler numériquement des paramètres d'écoulements de fluides au sein d'un milieu hétérogène, constituant un premier sous-domaine, traversé par au moins une discontinuité géométrique, constituant un second sous-domaine, **caractérisée en ce que** la méthode comporte les étapes suivantes :

- on génère un maillage chimère pour construire une représentation discrétisée desdits sous-domaines, en formant au moins un premier maillage pour mailler ledit premier sous-domaine et en formant au moins un deuxième maillage pour mailler ledit second sous-domaine, les deux maillages ayant au moins une zone de recouvrement ;
- on détermine des paramètres d'interpolation pour estimer des paramètres d'écoulement dans ladite zone de recouvrement tout en imposant la continuité des paramètres d'écoulements entre chaque sous-domaine ;
- on simule numériquement lesdits paramètres d'écoulement en résolvant les équations d'au moins un modèle d'écoulement dans lesdits sous-domaines et en interpolant les paramètres d'écoulements au niveau de ladite zone de recouvrement en utilisant lesdits paramètres d'interpolation.

2. Méthode selon la revendication 1, dans laquelle la génération dudit maillage chimère comporte les étapes suivantes :

- on définit pour ledit premier sous-domaine une méthode d'interpolation permettant d'estimer des paramètres d'écoulement de fluides pour chaque maille dudit premier maillage inclue dans la zone de recouvrement ;
- on définit un paramètre de recouvrement définissant la taille de ladite zone de recouvrement ;
- on détermine une frontière limite, en accord avec ladite méthode d'interpolation et ledit paramètre de recouvrement ;
- on détermine les mailles dudit premier maillage à interpoler en fonction de ladite frontière limite, en sélectionnant les mailles dont tous les points à interpoler se trouvent à l'intérieur de ladite frontière limite ;

3. Méthode selon la revendication 2, dans laquelle la génération dudit maillage chimère comporte les étapes suivantes :

- on détermine et désactive des mailles, parmi lesdites mailles dudit premier maillage à interpoler, qui ne serviront pas à priori à interpoler des paramètres d'écoulement pour des mailles dudit second maillage, en sélectionnant des mailles dont toutes les mailles voisines sont à interpoler ;
- on définit pour ledit second sous-domaine une méthode d'interpolation permettant d'estimer des paramètres d'écoulement de fluides pour chaque maille dudit second maillage inclue dans la zone de recouvrement ;
- on vérifie que toutes les mailles dudit second maillage à interpoler sont interpolables et l'on rajoute les mailles désactivées nécessaires à ces interpolations.

4. Méthode selon l'une des revendications 2 et 3, dans laquelle lesdites méthodes d'interpolation sont choisies parmi au moins l'une des méthodes suivantes :

- interpolation des paramètres d'écoulement au centre des mailles ;
- interpolation des paramètres d'écoulement au centre des faces des mailles ;
- interpolation des flux sur les faces des mailles.

5. Méthode selon la revendication 1, dans laquelle ladite discontinuité géométrique étant un puits, ledit second maillage est un maillage radial.

6. Méthode selon la revendication 5, dans laquelle ledit maillage radial est généré à partir de l'une au moins des méthodes géométrique suivantes :

- une méthode géométrique basée sur les rayons initial et final, le nombre de mailles suivant r et la progression géométrique souhaitée q ;
- une méthode géométrique basée sur les rayons initial et final, le nombre de mailles suivant r et la longueur des mailles de bord suivant r ;
- une méthode automatique basée localement sur la longueur moyenne des arêtes de mailles dudit premier maillage.

7. Méthode selon la revendication 1, dans laquelle on détermine des mailles nécessaires à l'interpolation des paramètres d'écoulements au niveau des zones de recouvrement en déterminant l'enveloppe convexe de centres de mailles contenant un point donné, et en déterminant une maille contenant ledit point donné.

8. Méthode selon la revendication 7, dans laquelle on détermine l'enveloppe convexe à l'aide d'une technique de tri appelée "bucket sort".

9. Méthode selon la revendication 7, dans laquelle on détermine une maille contenant ledit point donné à l'aide d'un maillage virtuel.

**Claims**

1. A method for digitally simulating flow parameters of fluids within a heterogeneous medium, constituting a first sub-domain, through which at least one geometrical discontinuity passes, constituting a second sub-domain, **characterised in that** the method comprises the following steps:

   - a chimerical grid is generated in order to construct a discretised representation of said sub-domains by forming at least one first grid to grid said first sub-domain and forming at least one second grid to grid said second sub-domain, the two grids having at least one overlapping area;
   - interpolation parameters are determined in order to estimate flow parameters in said overlapping area while imposing the continuity of the flow parameters between each sub-domain;
   - said flow parameters are digitally simulated by solving the equations of at least one flow pattern in said sub-domains and interpolating the flow parameters at said overlapping area, using said interpolation parameters.

2. The method according to Claim 1, wherein the generation of said chimerical grid comprises the following steps:

   - an interpolation method is defined for said first sub-domain which makes it possible to estimate flow parameters of fluids for each cell of said first grid comprised in the overlapping area;
   - an overlapping parameter defining the size of said overlapping area is defined;
   - a boundary line is determined, in accordance with said interpolation method and said overlapping parameter;
   - the cells of said first grid to be interpolated are determined according to said boundary line, by selecting the cells of which all of the points to be interpolated lie within said boundary line.

3. The method according to Claim 2, wherein the generation of said chimerical grid comprises the following steps:

   - cells from said cells of said first grid to be interpolated are determined and deactivated, these cells not being used a priori for interpolating flow parameters for cells of said second grid, by selecting cells which have adjacent cells which are all to be interpolated.
   - an interpolation method is defined for said second sub-domain which makes it possible to estimate flow parameters of fluids for each cell of said second grid comprised in the overlapping area;
   - all of the cells of said second grid to be interpolated are checked with regard to interpolability and the deactivated cells which are necessary to these interpolations are added.

4. The method according to one of Claims 2 and 3, wherein said interpolation methods are selected from at least one of the following methods:

   - interpolation of the flow parameters in the centre of the cells;
   - interpolation of the flow parameters in the centre of the cell faces;
   - interpolation of the flows on the cell faces.

5. The method according to Claim 1, wherein if said geometric discontinuity is a well, said second grid is a radial grid.

6. The method according to Claim 5, wherein said radial grid is generated from at least one of the following geometric methods:

   - a geometric method based on the initial and final radii, the number of cells according to r and the desired geometric progression q;
   - a geometric method based on the initial and final radii, the number of cells according to r and the length of the border cells according to r;
   - an automatic method based locally on the average length of the cell edges of said first grid.

7. The method according to Claim 1, wherein cells which are necessary to the interpolation of the flow parameters at the overlapping areas are determined by determining the convex envelope of centres of cells containing a given point, and determining a cell containing said given point.

8. The method according to Claim 7, wherein the convex envelope is determined using a sorting technique called "bucket sort".

9. The method according to Claim 7, wherein a cell containing said given point is determined using a virtual grid.

**Patentansprüche**

1. Verfahren zum numerischen Simulieren der Strömungsparameter von Fluiden in einem heterogenen Medium, das ein erstes Teilgebiet dargestellt, das von mindestens einer geometrischen Diskontinuität durchquert wird, die ein zweites Teilgebiet darstellt, **dadurch gekennzeichnet, dass** das Verfahren die folgenden Schritte umfasst:

   - Erzeugen eines Chimera-Gitters, um eine diskretisierte Darstellung der Teilgebiete zu konstruieren, indem mindestens ein erstes Gitter gebildet wird, um das erste Teilgebiet zu vernetzen und indem mindestens ein zweites Gitter gebildet wird, um das zweite Teilgebiet zu vernetzen, wobei die beiden Gitter mindestens eine Überlappungszone aufweisen;
   - Bestimmen der Interpolationsparameter, um Strömungsparameter in der Überlappungszone zu ermitteln und dabei die Kontinuität der Strömungsparameter zwischen jedem Teilgebiet zu erzwingen;
   - numerisches Simulieren der Strömungsparameter, indem die Gleichungen mindestens eines Strömungsmodells in den Teilgebieten gelöst werden und indem unter Verwendung der Interpolationsparameter die Strömungsparameter in der Überlappungszone interpoliert werden.

2. Verfahren nach Anspruch 1, wobei die Erzeugung des Chimera-Gitters die folgenden Schritte umfasst:

   - Definieren eines Interpolationsverfahrens für das erste Teilgebiet, das es ermöglicht, Strömungsparameter von Fluiden für jede Zelle des ersten Gitters, die in der Überlappungszone enthalten ist, zu ermitteln;
   - Definieren eines Überlappungsparameters, der die Größe der Überlappungszone definiert;
   - Bestimmen einer Randbegrenzung in Übereinstimmung mit dem Interpolationsverfahren und dem Überlappungsparameter;
   - Bestimmen der Zellen des ersten zu interpolierenden Gitters in Abhängigkeit von der Randbegrenzung, indem die Zellen ausgewählt werden, von denen sich alle zu interpolierenden Punkte innerhalb der Randbegrenzung befinden;

3. Verfahren nach Anspruch 2, wobei die Erzeugung des Chimera-Gitters die folgenden Schritte umfasst:

   - Bestimmen und Deaktivieren der Zellen, aus den Zellen des ersten zu interpolierenden Gitters, die nicht von vornherein dazu dienen, Strömungsparameter für die Zellen des zweiten Gitters zu interpolieren, indem Zellen ausgewählt werden, von denen alle benachbarten Zellen zu interpolieren sind;
   - Definieren eines Interpolationsverfahrens für das zweite Teilgebiet, das es ermöglicht, Strömungsparameter von Fluiden für jede Zelle des zweiten Gitters, die in der Überlappungszone enthalten ist, zu ermitteln;
   - Überprüfen, dass alle Zellen des zweiten zu interpolierenden Gitters interpolierbar sind, und Hinzufügen der deaktivierten Zellen, die für diese Interpolationen erforderlich sind.

4. Verfahren nach einem der Ansprüche 2 -und 3, wobei die Interpolationsverfahren aus mindestens einem der folgenden Verfahren ausgewählt sind:

   - Interpolation der Strömungsparameter im Zentrum der Zellen;
   - Interpolation der Strömungsparameter im Zentrum der Seitenflächen der Zellen;
   - Interpolation der Ströme auf die Seitenflächen der Zellen.

5. Verfahren nach Anspruch 1, wobei die geometrische Diskontinuität eine Bohrung ist, wobei das zweite Gitter ein Radialgitter ist.

6. Verfahren nach Anspruch 5, wobei das Radialgitter ausgehend von mindestens einem der folgenden geometrischen Verfahren erzeugt wird:

   - einem geometrischen Verfahren, das auf dem Anfangs- und Endradius, der Anzahl der Zellen entlang r und der gewünschten geometrischen Progression $q$ basiert;

- einem geometrischen Verfahren, das auf dem Anfangs- und Endradius, der Anzahl der Zellen entlang r und der Länge der Randzellen entlang r basiert;
- ein automatisches Verfahren, das lokal auf der mittleren Länge der Zellenkanten des ersten Gitters basiert.

7. Verfahren nach Anspruch 1, wobei die Zellen, die für die Interpolation der Strömungsparameter an den Überlappungszonen erforderlich sind, bestimmt werden, indem die konvexe Hülle der Zellzentren bestimmt wird, die einen gegebenen Punkt enthalten, und indem eine Zelle bestimmt wird, die den gegebenen Punkt enthält.

8. Verfahren nach Anspruch 7, wobei die konvexe Hülle mit Hilfe einer "Bucketsort" genannten Sortiertechnik bestimmt wird.

9. Verfahren nach Anspruch 7, wobei eine Zelle, die den gegebenen Punkt enthält, mit Hilfe eines virtuellen Gitters bestimmt wird.

**Figure 1**

**Figure 2**

MP

MR

CL

**Figure 3**

**Figure 4A**

**Figure 4B**

**Figure 5**

**Figure 6**

**Figure 7**

**Figure 8**

# EP 1 729 153 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2747490
- US 5844564 A

**Littérature non-brevet citée dans la description**

- **ALEXANDER S. WILLIAMSON ; JOHN E. CHAPPELEAR.** *SPE 7697,* 1981
- **SOPHIE BALAVEN-CLERMIDY.** Génération de maillages hybrides pour la modélisation de réservoirs pétroliers. *Thèse de doctorat, IFP,* 2001
- **CHESSHIRE ; HENSHAW.** Composite Overlapping Meshes for the Solution ofPartial Differential Equations. *Journal of computational physics,* 1990, vol. 90, 1-64
- **SHIH.** Overset grids: Fundamentals and Practical Issues. *AIAA Applied Aerodynamics Conference,* 2002, vol. 3259
- **LIN, C.W. ; SMITH, G.D. ; FISHER, S.C.** Application of a Multiblock Grid Generation Approach to Ship Configuration. *3rd International Conference on Numerical Grid Generation in CFD,* Juin 1991
- Numerical Computation of Multiphase Flows in Porous media. **PETER BASTIAN.** Habilitationsschrift, Technische Fakultät. Christian-Albrechrs-Universität Kiel, 1999
- The Finite Volume Methods. **THIERRY GALLOUËT ; RAPHAËLLE HERBIN ; ROBERT EYMARD.** Handbook of Numerical analysis. 2000, 713-1020